# EUROPEAN PATENT APPLICATION

(11) **EP 2 172 900 A1**
(43) Date of publication of application: **07.04.2010**
(21) Application number: 07791054.5
(22) Date of filing: 20.07.2007
(51) Int. Cl.: G06Q 50/00, G06F 13/00

(54) **COMMUNITY GENERATION SUPPORT SYSTEM, COMMUNITY GENERATION SUPPORT METHOD, AND COMMUNITY GENERATION SUPPORT PROGRAM**

(71) Applicant: Hewlett-Packard Development Company, L.P., Houston, TX 77070 (US)
(72) Inventor: SUGAHARA, Taro, Tokyo 168-8585 (JP); ODA, Hiromi, Tokyo 168-8585 (JP); SHIMIZU, Hidenori, Tokyo 168-8585 (JP); SHIMIZU, Hiroyuki, Tokyo 168-8585 (JP); MIYAUCHI, Koji, Tokyo 168-8585 (JP); DU, Qingjie, Tokyo 168-8585 (JP)
(74) Representative: Exell, Jonathan Mark
(86) International application number: PCT/JP2007/064316
(87) International publication number: WO 2009/013789

(57) **Abstract**

A community generation support system and a community generation support method. A community generation support device (3) monitors public information stored in a web server (24). The community generation support device (3) detects a potential community on the basis of monitoring of information. The community generation support device (3) requests the web server (24) to generate a community space concerning the detected potential community. The web server (24) generates the community space. The community generation support device (3) transmits information on invitation for asking whether each potential community member wants to participate in the community to the user terminal (20) of the potential community member through the web server (24). The user terminal (20) transmits information on registration of participation to the community generation support device (3) through the web server (24). The user terminal (20) performs processing for making a user participate in the community.

## Description

### Technical Field

The present invention relates to a community generation supporting system, a community generation supporting method, and a program therefor.

### Background Art

For example, Non-patent Document 1 discloses a method of systematically listing up communities that are picked up through the crawling of the Web.
Non-patent Document 2 discloses a technique of finding a user community by paying attention to terms contained in a uniform resource locator (URL).
Non-patent Document 1:
http://www8.org/w8-papers/4a-search-mining/trawling/trawling.h tml
   Non-patent Document 2:
   http://research.nii.ac.jp/kaken-johogaku/reports/H16_A02/A02-3 2.pdf

### Disclosure of the Invention

### Problem to be solved by the Invention

The present invention has been made in view of the background described above, and it is therefore an object of the present invention to provide a community generation supporting system, a community generation supporting method, and a program therefor in which members of a latent community are detected and generation of a community constituted of the members is supported.

### Means for solving the Problem

In order to achieve the above-mentioned object, the present invention provides a community generation supporting system including: a plurality of user terminals; an information providing device which stores and provides information; and a community generation supporting device which supports generation of a community that users of the plurality of user terminals join, the plurality of user terminals, the information providing device, and the community generation supporting device being connected to a network, the plurality of user terminals sending information to the information providing device via the network, in which the community generation supporting device includes: a community generation condition information accepting means which accepts community generation condition information concerning a generation condition of the community; an information observing means which observes the information stored in the information providing device; a latent community detecting means which, based on the information observed by the information observing means, detects a latent community which may be constituted of users who satisfy a condition information according to the community generation condition information but which the users have not joined yet; a community generation supporting means which checks with user terminals of the users of the detected latent community about whether or not the users wish to join a community that corresponds to the latent community, thereby supporting the generation of the community; and a community detecting means which, depending on a result of the process of the community generation supporting means, detects the community if the condition according to the community generation condition information is satisfied.

The present invention also provides a community generation supporting method performed among a plurality of user terminals, an information providing device, which stores and provides information, and a community generation supporting device, which supports generation of a community that users of the plurality of user terminals join, the plurality of user terminals, the information providing device, and the community generation supporting device being connected to a network, the plurality of user terminals sending information to the information providing device via the network, the community generation supporting method including performing by the community generation supporting device: a community generation condition information accepting step of accepting community generation condition information concerning a generation condition of the community; an information observing step of observing the information stored in the information providing device; a latent community detecting step of detecting, based on the observed information, a latent community which may be constituted of users who satisfy a condition according to the community generation condition information but which the users have not joined yet; a community generation supporting step of checking with user terminals of the users of the detected latent community about whether or not the users wish to join a community that corresponds to the latent community, thereby supporting the generation of the community; and a community detecting step of detecting, depending on a result of the process of the community generation supporting step, the community if the condition according to the community generation condition information is satisfied.

The present invention also provides a community generation supporting program executed among a plurality of user terminals, an information providing device, which stores and provides information, and a community generation supporting device, which supports generation of a community that users of the plurality of user terminals join, the plurality of user terminals, the information providing device, and the community generation supporting device being connected to a network, the plurality of user terminals sending information to the information providing device via the network, the community generation supporting program causing the community generation supporting device to execute: a community generation condition information accepting step of accepting community generation condition information concerning a generation condition of the community; an information observing step of observing the information stored in the information providing device; a latent community detecting step of detecting, based on the observed information, a latent communitywhichmaybe constituted of users who satisfy a condition according to the community generation condition information but which the users have not joined yet; a community generation supporting step of checking with user terminals of the users of the detected latent community about whether or not the users wish to join a community that corresponds to the latent community, thereby supporting the generation of the community; and community detecting step of detecting, depending on a result of the process of the community generation supporting step, the community if the condition according to the community generation condition information is satisfied.

### Effect of the Invention

According to the present invention, it is possible to provide the community generation supporting system, the community generation supporting method, and the program therefor in which members of a latent community are detected and generation of a community constituted of the members is supported.

### Brief Description of the Drawings

[FIG. 1] A diagram exemplifying a configuration of a community generation supporting system according to an embodiment of the present invention.
[FIGS. 2] Diagrams exemplifying a latent community and a concept of a community.
[FIG. 3] A diagram illustrating a mode of community generation which is performed among nodes in the community generation supporting system illustrated in FIG. 1.
[FIG. 4] A diagram exemplifying a hardware configuration of user terminals, web servers, and a community generation supporting device which are illustrated in FIG. 1.
[FIG. 5] A diagram illustrating a configuration of a user terminal program which is executed in the user terminals illustrated in FIG. 1.
[FIG. 6] A diagram illustrating a configuration of a web server program which is executed in the web servers illustrated in FIG. 1.
[FIG. 7] A diagram exemplifying a structure of member profile information.
[FIG. 8] A diagram exemplifying a structure of member's publicly open information.
[FIG. 9] A diagram illustrating a configuration of a community generation supporting program which is executed in the community generation supporting device illustrated in FIG. 1.
[FIG. 10] A diagram exemplifying a structure of community generation condition information.
[FIG. 11] A diagram illustrating configurations of agents within an information observing container which is illustrated in FIG. 9.
[FIG. 12] A flow chart illustrating a process of a community space observation agent.
[FIG. 13] A diagram illustrating configurations of agents within a community detecting container which is illustrated in FIG. 9.
[FIG. 14] A flow chart illustrating a process of a user profile information searching module.
[FIG. 15] A diagram exemplifying a user point table which is stored in a user point storing module.
[FIG. 16] A flow chart illustrating a process of a user point manager.
[FIG. 17] A flow chart illustrating a process of a registered member manager.
[FIG. 18] A diagram illustrating a configuration of an agent within a community generation supporting container which is illustrated in FIG. 9.
[FIG. 19] A communication sequence diagram illustrating an overall operation of the community generation supporting system illustrated in FIG. 1.

### Best Mode for carrying out the Invention

An embodiment of the present invention is described below.

### [Community Generation Supporting System]

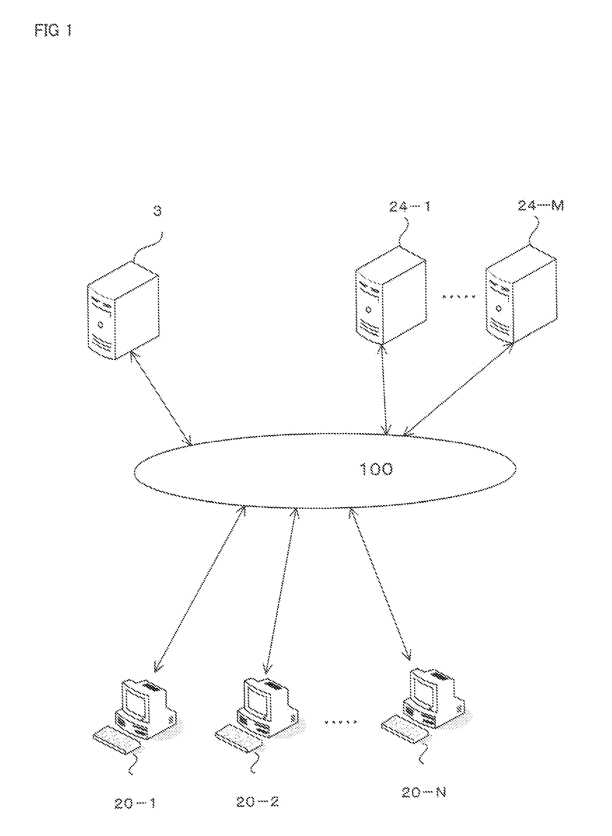

FIG. 1 is a diagram exemplifying a configuration of a community generation supporting system 1 according to the embodiment of the present invention.
As illustrated in FIG. 1, the community generation supporting system 1 is constituted by connecting user terminals 20-1 to 20-N (N is an integer equal to or larger than 1. N may not always be the same number.), which are PCs or the like, web servers 24-1 to 24-M (M is an integer equal to or larger than 1. N may not always be the same number.), and a community generation supporting device 3 via a network 100.

In the following description, an abbreviation such as "user terminal 20" may be used to refer to any one of a plurality of components without specifying one of the user terminals 20-1 to 20-N.
Also, devices in the community generation supporting system 1 that may take an active role in information processing and communication, such as the community generation supporting device 3, may be referred collectively to as nodes in the following description.
Arbitrary two of the devices or more that constitute the community generation supporting system 1 illustrated in FIG. 1 may appropriately be configured integrally.
Throughout the drawings referred to below, practically identical components and processes are denoted by the same numbers.

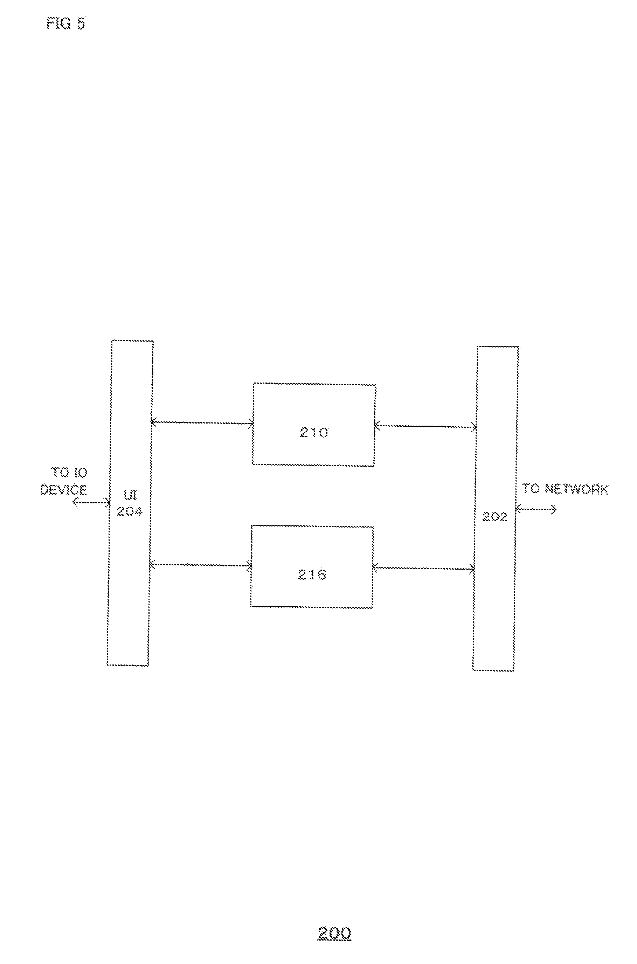

The user terminal 20, as is described later with reference to FIG. 5, creates electronic mail to send the electronic mail to the network 100 and also receives electronic mail from the network 100.
The user terminal 20 sends information that a user wishes to be made public via the network 100 to the web server 24.
The user terminal 20, which is a PC in this embodiment, may instead be a cellular phone or a personal digital assistant (PDA), for example.

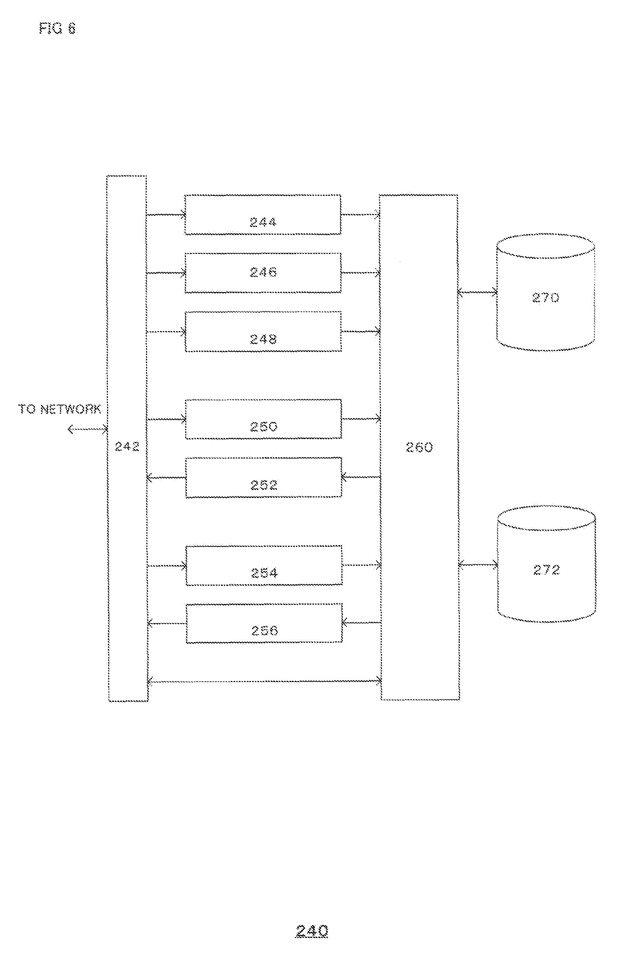

The web server 24, as is described later with reference to FIG. 6, stores information from the user terminal 20.
The web server 24 provides the stored information to nodes connected to the network 100, thereby making information such as a web page public.
The web server 24 also manages a virtual spot where a plurality of users of the user terminals 20 have a discussion or interact with one another through an exchange of messages among the users or other measures.
"Virtual spots" are, for example, web sites that include blogs (weblogs) and bulletin board systems (BBSs) concerning specific topics. These are herein collectively referred to as community spaces, and virtual communities formed via the community spaces are referred to as communities.
Participants of a community (i.e., users constituting a community) are referred to as community members, or simply referred to as members.

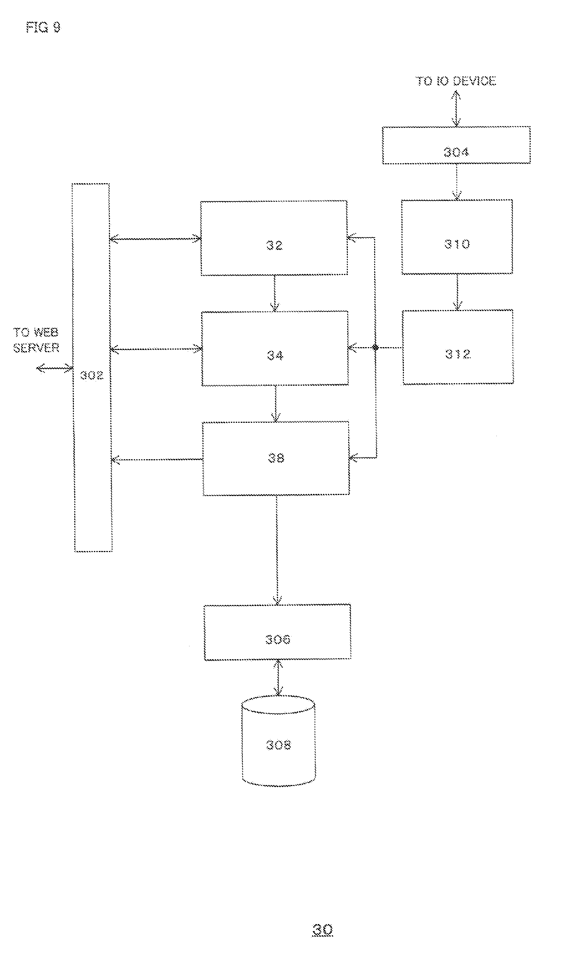

The community generation supporting device 3, as is described later with reference to FIG. 9 and other drawings, observes information of the web server 24 to detect a potential community (latent community) concerning a predetermined topic.
A description is given on latent communities.

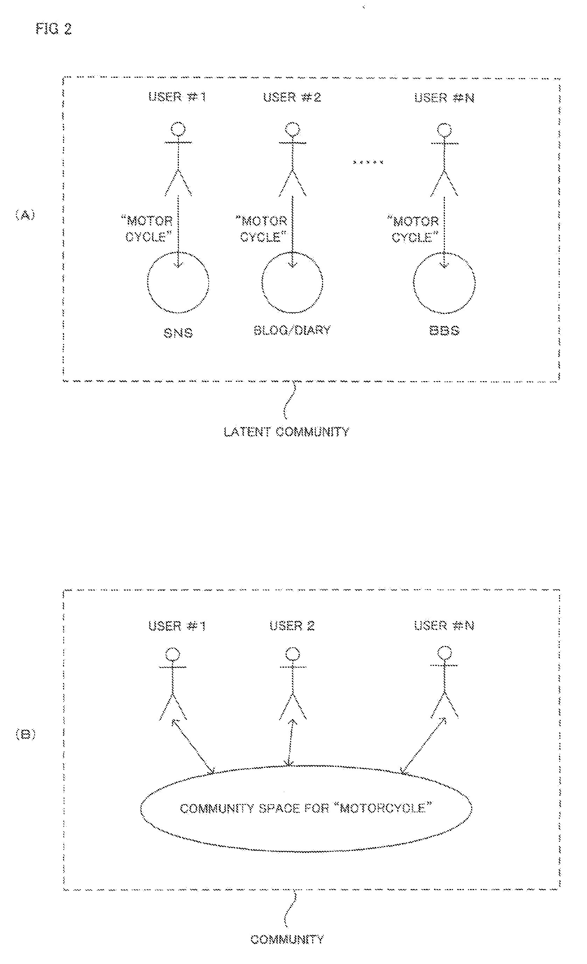

FIGS. 2 are diagrams exemplifying a latent community and a concept of a community. FIG. 2 (A) is a diagram exemplifying a latent community and FIG. 2(B) is a diagram exemplifying a concept of a community.

In the example of FIG. 2 (A), users #1 to #N individually exchange information about "motorcycles" in separate community spaces, or simply send text data "motorcycle" to separate community spaces individually.
For instance, the user #1 exchanges information about "motorcycles" in a social networking service (SNS), the user #2 writes a word "motorcycle" in a blog, and the user #N posts to a BBS about "motorcycles".
Because the users #1 to #N send each information about "motorcycles" to a community space, it may be surmised that the users #1 to #N are interested in "motorcycles".

On the other hand, the users #1 to #N have not joined a single community concerning "motorcycles" with their own intent.
Then again, there is a possibility that, upon receiving a notification of invitation to a community space concerning "motorcycles", the users #1 to #N may join this community space and constitute a community concerning "motorcycles".
A group of users who have a possibility of forming a community concerning a certain topic ("motorcycles" in the example described above) like this, in other words, latent community members, is referred to as a latent community.

"Observing information of the web server 24" mentioned above is to observe information about a predetermined topic (e.g., "motorcycles") that is made public by the web server 24.
In the case where the predetermined topic is a topic about "motorcycles", for example, whether or not the information made public contains keywords related to "motorcycle" is observed.
When keywords related to "motorcycle" are contained in the information made public, a user who has created this information may become a member of a community concerning "motorcycles" if the user satisfies a predetermined condition.
The "predetermined condition" is, for example, set such that a user may become a community member when points given to the user for each piece of information made public reach a predetermined count or higher in total.

To give a specific example, in the case where a keyword "motorcycle" is contained in information created by a user and made public, for example, predeterminedpoints (e.g., 2 points) are given to the user and, when the points total a predetermined count (e.g., 10 points) or higher, the user may become a member of a community concerning "motorcycles".
When a predetermined number (e.g., 3 users) of users or more who may become members of a community concerning "motorcycles" are detected, for example, the community generation supporting device 3 detects the formation of a latent community that is constituted of those users.

The community generation supporting device 3 sends a message to the user terminals 20 of the members who constitute the detected latent community (latent community members) in order to check whether or not the members wish to join.
The community generation supporting device 3 receives member registration information from the user terminals 22 of the members whose thought on joining has been checked.
The community generation supporting device 3 also performs a process necessary for enabling a member who has expressed his/her intent to join a community that corresponds to this latent community to join the community.

"The joining of a member to a community" includes, for example, the member utilizing the community space through the user terminal 20.
FIG. 2 (B) exemplifies a mode in which the users #1 to #N utilize a single community space concerning "motorcycles" and a single community concerning "motorcycles" is generated through the process of the community generation supporting device 3 described above.

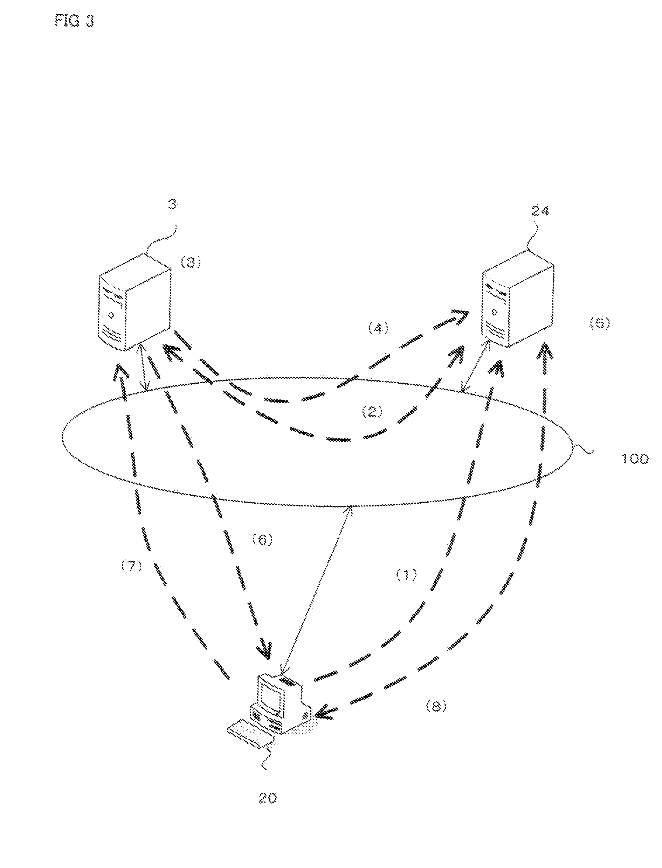

FIG. 3 is a diagram illustrating a mode of community generation which is performed among nodes in the community generation supporting system 1 illustrated in FIG. 1.
The community generation supporting device 3 supports the generation of a community in the following mode.

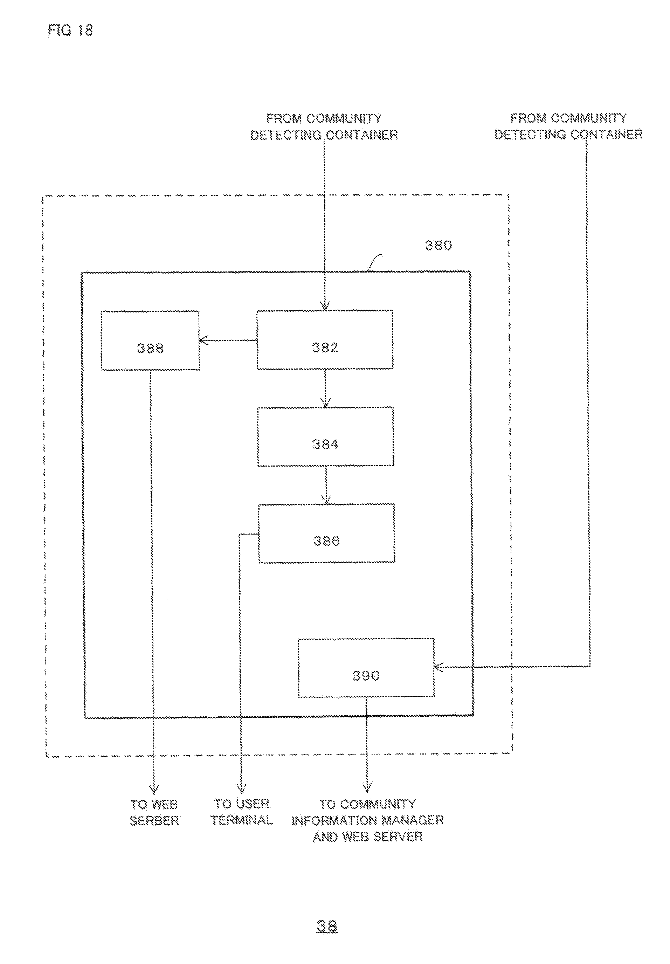

(1) The user terminal 20 sends to the web server 24 information to be made open to the nodes via the network 100 (publicly open information), and the web server 24 stores the received publicly open information.
(2) The community generation supporting device 3 observes the information stored in the web server 24.
(3) Based on the observation of the information, the community generation supporting device 3 detects a latent community.
(4) The community generation supporting device 3 requests the web server 24 to generate a community space related to the detected latent community.
   To which web server 24 the request is to be made is identified by a community generation supporting agent 380 of the community generation supporting device 3 which is described later with reference to FIG. 18.

(5) The web server 24 generates the community space.
(6) The community generation supporting device 3 sends, via the web server 24 identified in (4), to the user terminal 20 of each of users constituting the latent community (latent community members), an invitation notification which asks whether or not the user wishes to join a community corresponding to this latent community.
(7) The user terminal 20 that has received the invitation notification sends a member registration notification via the identified web server 24 to the community generation supporting device 3 in the case where the user intends to join this community.
(8) The user terminal 20 performs a process that enables the user to join the community (for example, sending information to the community space).

### [Hardware]

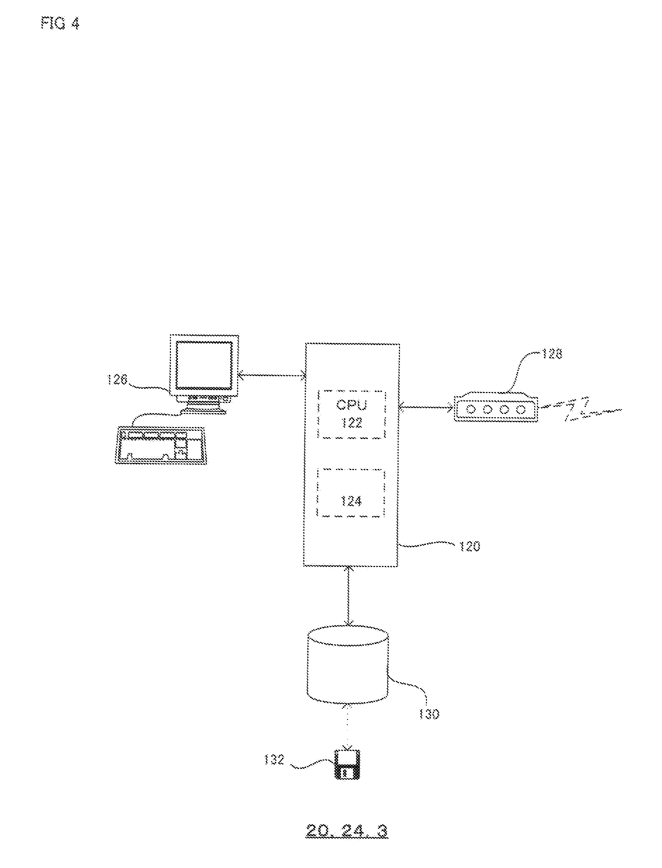

FIG. 4 is a diagram exemplifying a hardware configuration of the user terminal 20, web server 24, and community generation supporting device 3 illustrated in FIG. 1.
As illustrated in FIG. 4, the user terminal 20, the web server 24, and the community generation supporting device 3 each include a main body 120, which contains among others a CPU 122 and a memory 124, an IO device 126, which includes among others a keyboard and a display, a communication device 128, which communicates with other nodes, and a storage device 130 such as a CD device or an HDD device which records and reproduces data on a storage medium 132.
In short, the user terminal 20, the web server 24, and the community generation supporting device 3 each include hardware components as a computer capable of information processing and communication with other nodes.

### [User Terminal Program]

FIG. 5 is a diagram illustrating a configuration of a user terminal program 200, which is executed in the user terminal 20 illustrated in FIG. 1.
As illustrated in FIG. 5, the user terminal program 200 includes a communication processing module 202, a user interface (UI) 204, a mail client module 210, and a web browser module 216.
For example, the user terminal program 200 is supplied to the user terminal 20 via the network 100 (FIG. 1) or via the storage medium 132 (FIG. 4), loaded onto the memory 124, installed in the user terminal 20, and then executed on an OS to be executed (not shown) with the use of specific hardware resources of the user terminal 20 (the same applies to each program described later).

In the user terminal program 200, the communication processing module 202 performs control for communication with other processing nodes.
The UI 204 accepts manipulations of the IO device 126 by a user and outputs data that indicates the accepted manipulations to the mail client module 210 and the web browser module 216.

The mail client module 210 accepts the data that indicates the user's manipulations from the UI 204 to create electronic mail, and sends the created electronic mail information to the network 100 via the communication processing module 202.
The mail client module 210 also receives electronic mail from the network 100 via the communication processing module 202, and outputs this electronic mail information to the UI 204.
The UI 204 displays the electronic mail information accepted from the mail client module 210 on the IO device 126.

The web browser module 216 performs a process for viewing a web page or other information that has been made public by the web server 24 or others, and outputs the processed information to the UI 204.
The web browser module 216 sends an HTTP request to the web server 24, and receives information such as web data from this web server 24 in response to the HTTP request.
The UI 204 displays the information from the web browser module 216 on the IO device 126.
Upon input of data that indicates manipulations by a user from the UI 204, the web browser module 216 creates among others publicly open information which is made public by the web server 24 or others, and sends the information to the web server 24 via the communication processing module 202 and via the network 100.

### [Web Server Program]

FIG. 6 is a diagram illustrating a configuration of a web server program 240, which is executed in the web server 24 illustrated in FIG. 1.
As illustrated in FIG. 6, the web server program 240 includes a communication processing module 242, a user ID receiving module 244, a member profile information receiving module 246, a member's publicly open information receiving module 248, a mail receiving module 250, a mail sending module 252, an HTTP request receiving module 254, a web data sending module 256, a community space manager 260, a member profile database (DB) 270, and a community space DB 272.
In the web server program 240, the communication processing module 242 performs control for communication with other processing nodes.
When electronic mail and publicly open information are received from the user terminal 20 via the network 100 and the communication processing module 242, or on other occasions, the user ID receiving module 244 receives an identifier (user ID) such as an electronic mail address from this user terminal 20.
The user ID receiving module 244 outputs the received user ID to the community space manager 260.

The community space manager 260 performs a process for providing, as web data, a service that uses a community space to nodes connected to the network 100.
The community space manager 260 manages information relevant to a community space, such as profile information and publicly open information of a user.
The community space manager 260 performs user authentication and other processes based on a user ID from the user ID receiving module 244.
The community space manager 260 may provide a service that uses a community space only to the user terminal 20 of a user who has successfully been authenticated by this authentication process.

The community space manager 260 also creates a community space upon request from the community generation supporting device 3, and performs a process for running a service that uses the created community space.
The community space manager 260 stores information relevant to the created community space (community information) in the community space DB 272, and manages IO and the like of the information.
The community space manager 260 receives from the community generation supporting device 3 a community invitation notification, which is to be sent to the user terminal 20, and sends the community invitation notification to the user terminal 20.
The community space manager 260 sends a member registration notification from the user terminal 20 to the community generation supporting device 3.

The member profile information receiving module 246 receives, from the user terminal 20, via the network 100 and the communication processing module 242, a profile of a member (member profile information) of this user terminal 20.
The member profile information receiving module 246 outputs the received member profile information to the community space manager 260.
The community space manager 260 stores the member profile information from the member profile information receiving module 246 in the member profile DB 270, and manages IO and the like of the information.

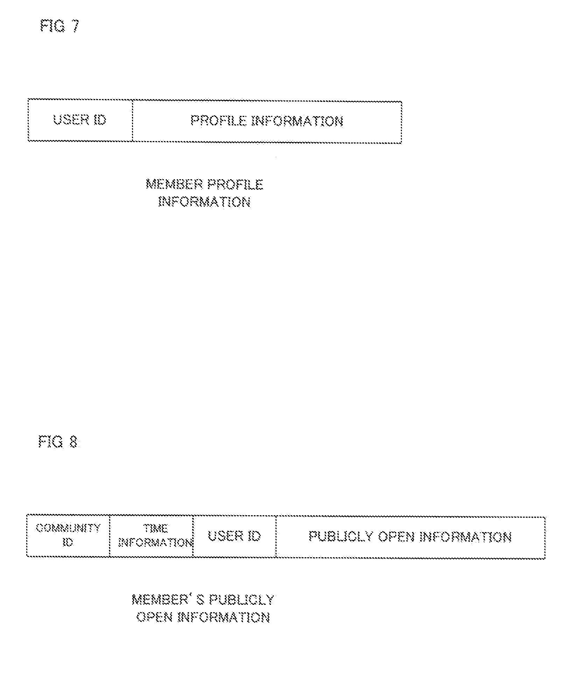

FIG. 7 is a diagram exemplifying a structure of member profile information.
As illustrated in FIG. 7, member profile information contains a user ID of a member and profile information of the member.

The member's publicly open information receiving module 248 (FIG. 6) receives publicly open information (member's publicly open information) from the user terminal 20 via the network 100 and the communication processing module 242.
The member's publicly open information receiving module 248 outputs the received member's publicly open information to the community space manager 260.
The community space manager 260 stores the member's publicly open information from the member's publicly open information receiving module 248 in the community space DB 272, and manages IO and the like of the information.

FIG. 8 is a diagram exemplifying a structure of member's publicly open information.
As illustrated in FIG. 8, member's publicly open information contains an identifier of a community space (community ID), time information, which indicates the time of transmission of this member's publicly open information, and a user ID and publicly open information of the member.
Publicly open information contains, for example, data posted to a BBS or data constituting a blog, and may be text data or may contain image data.

The mail receiving module 250 (FIG. 6) receives electronic mail from the user terminal 20 via the network 100 and the communication processing module 242.
The mail receiving module 250 outputs the received electronic mail to the community space manager 260.
Based on the electronic mail from the mail receiving module 250, the community space manager 260 performs a predetermined process for managing a community space.
When necessary, the community space manager 260 automatically creates, or an administrator thereof manually creates, electronic mail to be sent to the user terminal 20 of a member, and outputs the created electronic mail to the mail sending module 252.
The mail sending module 252 sends the electronic mail that is created by the community space manager 260 and addressed to one user terminal 20 to this user terminal 20 via the communication processing module 242 and the network 100.

The HTTP request receiving module 254 receives an HTTP request via the communication processing module 242 from a node connected to the network 100, and outputs the HTTP request to the community space manager 260.
The community space manager 260 outputs web data to the web data sending module 256 in response to the HTTP request from the HTTP request receiving module 254.
The web data sending module 256 sends the web data from the community space manager 260 via the communication processing module 242 and the network 100 to the node that has sent the HTTP request.
The member profile DB 270 and the community space DB 272 are separate databases, but may instead be the same database.

### [Community Generation Supporting Program]

FIG. 9 is a diagram illustrating a configuration of a community generation supporting program 30, which is executed in the community generation supporting device 3 illustrated in FIG. 1.
As illustrated in FIG. 9, the community generation supporting program 30 includes a communication processing module 302, an administrator interface (IF) 304, a community information manager 306, a community DB 308, a community generation condition information accepting module 310, a community generation condition information translating module 312, an information observing container 32, a community detecting container 34, and a community generation supporting container 38.
In the community generation supporting program 30, the communication processing module 302 performs control for communication with the web server 24 connected to the network 100.

The administrator IF 304 outputs community generation condition information, which is created through manipulations of the IO device 126 by a system administrator, to the community generation condition information accepting module 310.
The community generation condition information accepting module 310 accepts the community generation condition information from the administrator IF 304 and outputs the information to the community generation condition information translating module 312.

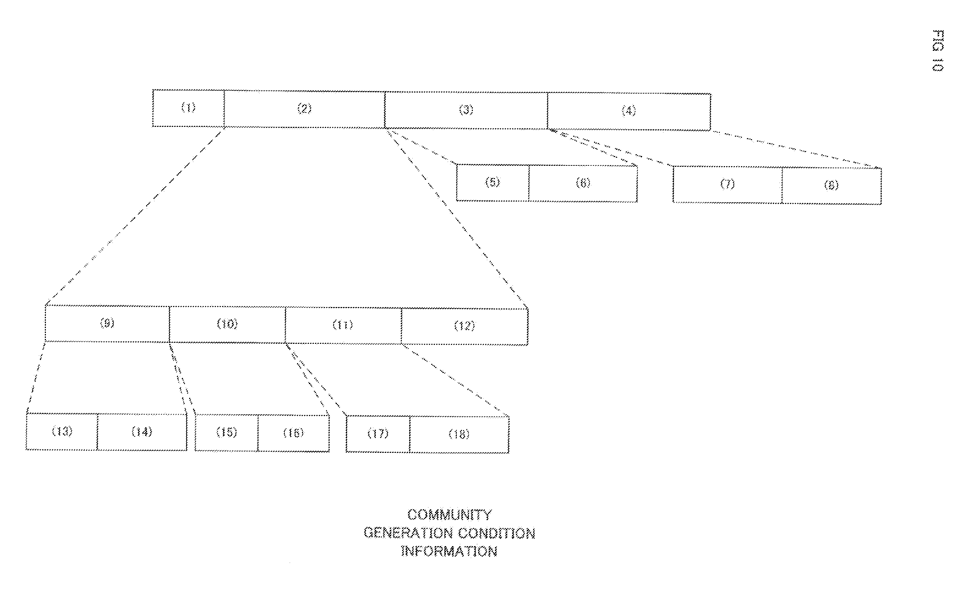

FIG. 10 is a diagram exemplifying a structure of community generation condition information.
As illustrated in FIG. 10, community generation condition information contains a community ID, latent community definition information, community definition information, and community generation supporting process information.
The community ID is the identifier of a community that may be generated under this community generation condition, and is uniquely assigned to each community.

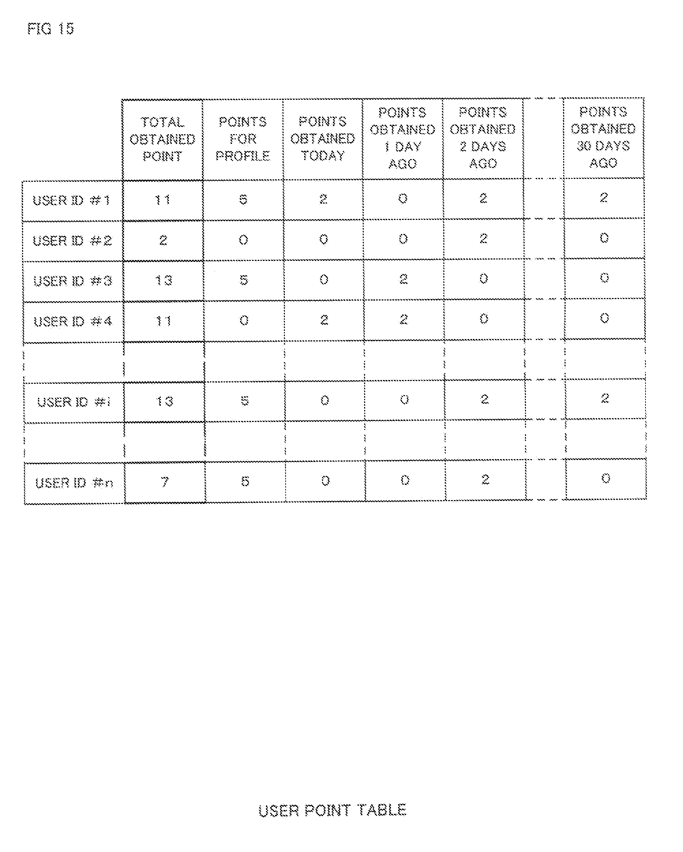

The latent community definition information is information that defines a condition under which a latent community is detected, and contains user profile condition information, user action condition information, latent community member condition information, and latent community formation condition information.
The user profile condition information is information that indicates a condition for determining, based on a profile of a user who is using a community space, whether or not the user may be a latent community member, and contains keyword information and profile point data.
The keyword information is information about a keyword contained in profile information, and the profile point data is data of points that are given to the user depending on the keyword information.
For instance, when profile information stored in the web server 24 contains a predetermined keyword related to this community, points according to the point data are given to a user who is associated with this profile information.
To give an example, when this community is a community concerning "motorcycles", the keyword information may contain such text information as "motorcycle", "bike", or "autobike".
A more detailed description is given on points with reference to FIG. 15.

The user action condition information is information that indicates a condition for determining, based on the actions of a user who is using an existing community space, whether or not the user may be a latent community member, and contains action definition information and action point data.
The action definition information is information that defines what action a user who may be a latent community member will take, and the action point data is data of points given to a user in accordance with the action definition information.
For instance, the action definition information may be information defining that the action to be taken is "a user writing in an existing community space a keyword about a topic to be discussed in a community that is newly detected and about to be generated."
To give an example, when information containing predetermined keyword information that is related to a community to be generated via the community generation supporting device 3 is written in a community space (BBS or the like) provided by the web server 24, a user who has written this information is given points according to the action point data.
In the case where this community is a community concerning "motorcycles", the action definition information may contain such text information as "motorcycle", "bike", or "autobike".
Points may be given to a user each time the user takes an action that corresponds to the action definition information.

The latent community member condition information is information for determining whether or not a user is possibly a latent community member, and contains action period information and member condition total point data.
The action period information is information for defining a period during which a user's action corresponding to the action definition information is counted in. When total points given to a user during a period that is indicated by the action period information are equal to or larger than points indicated by the member condition total point data, it is determined that the user is possibly a latent community member.
The latent community formation condition information is information that indicates a condition under which a latent community may be formed. For instance, when the number of users who are determined as possible latent community members is equal to or larger than a number set in the latent community formation condition information, the formation of a latent community is detected.

The community definition information is information that defines a condition under which a new community is detected, and contains member action condition information and community formation condition information.
The member action condition information is information that indicates a condition of what action is to be taken by a latent community member, and contains, for example, information indicating an action "a latent community member having submitted member registration to the community space."
The community formation condition information is information that indicates a condition under which a community may be formed based on the member action condition information.
For instance, when the number of latent community members who have submitted member registration is equal to or larger than a number set in the community formation condition information, the formation of a new community is detected.

The community generation supporting process information is information that indicates the specifics of a process performed by the community generation supporting device 3 to support the generation of a community, and contains an observation target server ID and community invitation message information.
The observation target server ID is the identifier of the web server 24 that is observed by the community generation supporting device 3, or of a community space that is provided by this web server 24.
The community invitation message information is information relevant to a message that is sent via the web server 24 to the user terminal 22 of a latent community member to check whether or not the member wishes to join. For example, the community invitation message information may be electronic mail information containing a predetermined message.

The community generation condition information translating module 312 (FIG. 9) is, for example, a compiler and translates the community generation condition information illustrated in FIG. 10 into agents that individually perform processes within the information observing container 32, the community detecting container 34, and the community generation supporting container 38.
An agent is a processing entity that performs a predetermined process within a container. A container is an execution environment in which an agent performs a process.

Of the pieces of information contained in the community generation condition information, the community generation condition information translating module 312 translates the user action condition information, the member action condition information, and the observation target server ID into agents that perform processes within the information observing container 32.
Of the pieces of information contained in the community generation condition information, the community generation condition information translating module 312 translates the user profile condition information, the latent community member condition information, the latent community formation condition information, and the community formation condition information into agents that perform processes within the community detecting container 34.
Of the pieces of information contained in the community generation condition information, the community generation condition information translating module 312 translates the community invitation message information into an agent that performs a process within the community generation supporting container 38.
The community generation condition information translating module 312 outputs these agents to their respective containers where the agents perform processes.
Obtaining the agents from the community generation condition information translating module 312, each container performs a process necessary for enabling each agent to perform a predetermined process.

Processes of the agents within the respective containers are outlined.
The agents within the information observing container 32 observe web data provided by the web server 24 that is associated with the observation target server ID, and output to the community detecting container 34 the identifier of a user who meets a condition set in the user action condition information.
The agents within the community detecting container 34 determine whether or not a user is possibly a latent community member based on the user ID from the information observing container 32, the identifier of a user who meets a condition set in the user profile condition information, and the latent community member condition information.
When a condition set in the latent community formation condition information is satisfied, the agents within the community detecting container 34 detect the formation of a latent community, and outputs a list of members constituting the latent community (latent community member list) to the community generation supporting container 38.

The agent within the community generation supporting container 38 requests the web server 24 to create a community space.
The agent within the community generation supporting container 38 also requests the web server 24 to send a message for invitation to a community that corresponds to the latent community (community invitation message) to the user terminal 20 of each member on the latent community member list.

The agents within the information observing container 32 receive a response to the community invitation message from the user terminal 20 and, when the response meets a condition set in the member action condition information, output the identifier of the user to the community detecting container 34.
The agents within the community detecting container 34 receive the user ID and, when a condition set in the community formation condition information is met, output a list of users who become community members (community member list) to the community generation supporting container 38.
The agent within the community generation supporting container 38 outputs the received community member list to the community information manager 306.
The community information manager 306 stores information about the detected community in the community DB 308 based on the accepted community member list, and manages IO of the information.

Configurations of the respective containers are described in detail below.

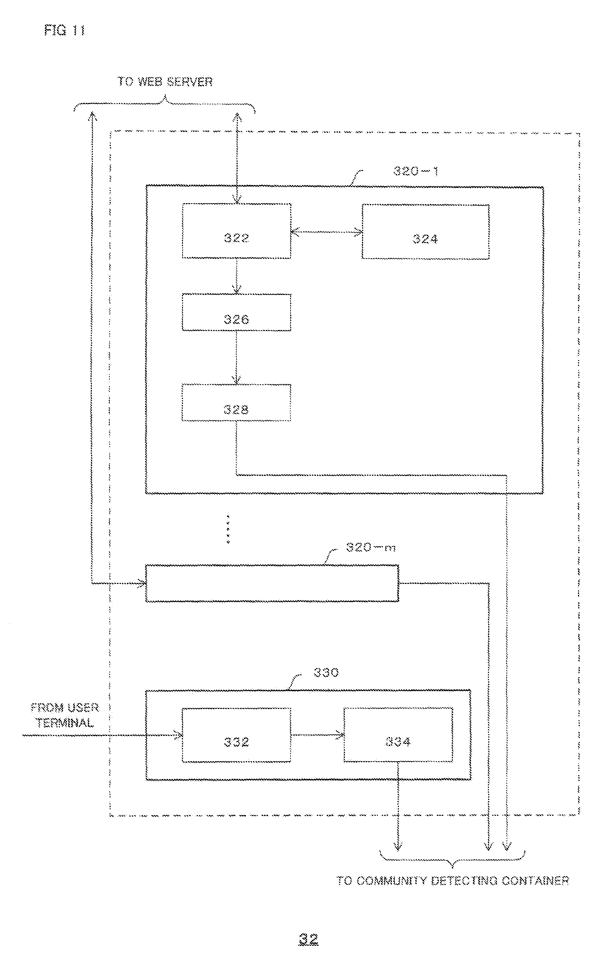

FIG. 11 is a diagram illustrating configurations of the agents within the information observing container 32 illustrated in FIG. 9. As illustrated in FIG. 11, the agents within the information observing container 32 are constituted of an observation agent 320-1 of a community space #1 to an observation agent 320-m of a community space #m (m is an integer equal to or larger than 1. The number m may not always be the same number) and a community member registration observing agent 330.
In the following description, an abbreviation such as "community space observation agent 320" may be used to refer to any one of the observation agent 320-1 of the community space #1 to the observation agent 320-m of the community space #m without specifying which one.

The observation agent 320-1 of the community space #1 to the observation agent 320-m of the community space #m observe the community space #1 to the community space #m, respectively, in a manner described below.
For example, the community space #1 maybe an SNS and a community space #2 may be a blog.
The community space #1 and the community space #2 may be run by the same web server 24 or by different web servers 24.
The community space observation agent 320 includes a web server information change searching module 322, a community space web data storing module 324, an information change judging module 326, and a user information notifying module 328.

The web server information change searching module 322 uses the observation target server ID illustrated in FIG. 10 to access the web server 24, and extracts web data of a community space that is associated with the observation target server ID.
The web server information change searching module 322 stores the extracted web data of the community space in the community space web data storing module 324.
After a predetermined period of time has passed, the web server information change searching module 322 uses the same observation target server ID to access the web server 24 again, and extracts web data of the community space associated with the observation target server ID.
The web server information change searching module 322 compares the extracted web data and the web data that has been stored in the community space web data storing module 324.
In the case where there is an update in the extracted web data, the web server information change searching module 322 outputs the update and the identifier of a user who has written this information to the information change judging module 326.
The web server information change searching module 322 may receive a notification of addition of publicly open information from the web server 24, instead of searching the web server 24 itself.

The information change judging module 326 determines whether or not there is any predetermined keyword information in the update, which is based on the action definition information illustrated in FIG. 10.
For example, when the community generation supporting device 3 is to support the generation of a community concerning motorcycles, "predetermined keyword information" may be such text data as "motorcycle", "bike", or "autobike".
When the predetermined keyword information is contained, the information change judging module 326 outputs the user ID to the user information notifying module 328.
The user information notifying module 328 outputs the user ID to the community detecting container 34 in association with points according to the action point data, which is illustrated in FIG. 10.
How many points are associated with the user ID may be varied depending on what keyword information is contained, or may be constant.

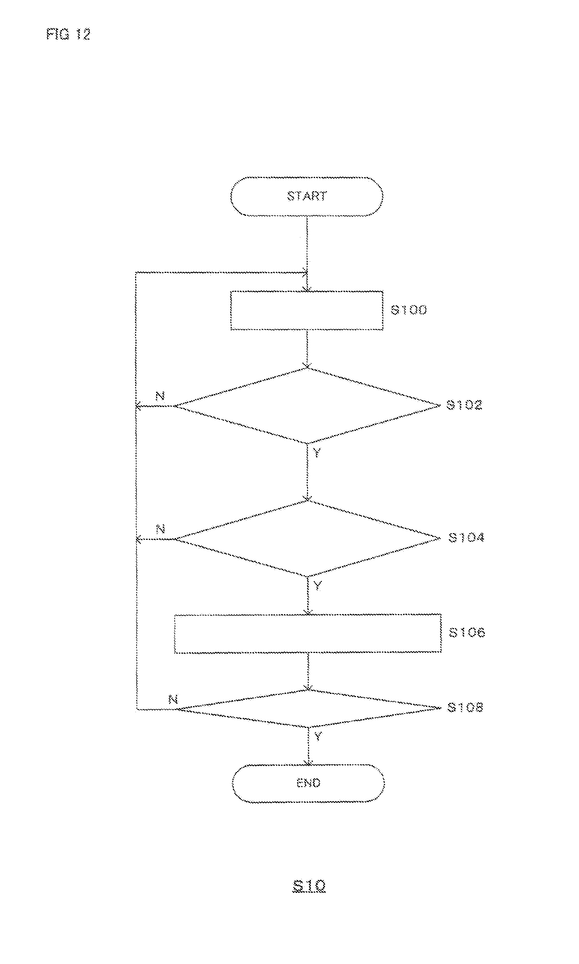

FIG. 12 is a flow chart illustrating the process (S10) of the community space observation agent 320.
As illustrated in FIG. 12, in Step 100 (S100), the web server information change searching module 322 extracts web data of a community space that is provided by one web server 24.
In Step 102 (S102), the web server information change searching module 322 determines whether or not there is any update in the extracted web data, and proceeds to S104 when there is an update and otherwise returns to S100.

In Step 104 (S104), the information change judgingmodule 326 determines whether or not there is any predetermined keyword information in the update, and proceeds to S106 when there is keyword information and otherwise returns to S100.
In Step 106 (S106), the user information notifying module 328 outputs points and a user ID to the community detecting container 34.
In Step 108 (S108), whether or not a command to exit the process has been received is determined, and the process is exited when the command has been received and otherwise returns to S100.

The community member registration observing agent 330 (FIG. 11) is created based on the member action condition information, and includes a member registration receiving module 332 and a member registration notifying module 334.
The member registration receiving module 332 receives, via the web server 24, from the user terminal 20, a user ID that is associated with this user terminal 20 and member registration information which indicates whether or not joining to the community is desired, and outputs the user ID and the member registration information to the member registration notifying module 334.
When the accepted member registration information is information that indicates the intent to "join", the member registration notifying module 334 outputs the member registration information and the user ID to the community detecting container 34.

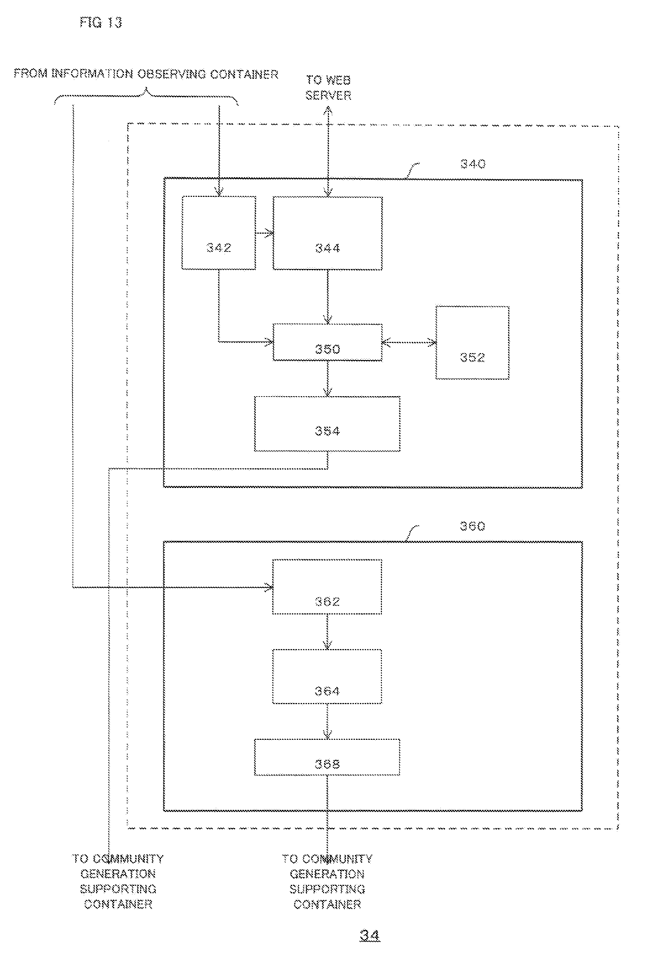

FIG. 13 is a diagram illustrating configurations of the agents within the community detecting container 34 illustrated in FIG. 9.
As illustrated in FIG. 13, the agents within the community detecting container 34 are constituted of a latent community detecting agent 340 and a community detecting agent 360.
The latent community detecting agent 340 includes a user information obtaining module 342, a user profile information searching module 344, a user point manager 350, a user point storing module 352, and a latent community member list notifying module 354.
The user information obtaining module 342 accepts points and a user ID from the information observing container 32, and outputs the points and the user ID to the user point manager 350.
The user information obtaining module 342 also outputs the accepted user ID to the user profile information searching module 344.

The user profile information searching module 344 uses the observation target server ID illustrated in FIG. 10 to access the web server 24, and extracts profile information of a user who is associated with this user ID from web data of a community space that is associated with the observation target server ID.
The user profile information searching module 344 determines whether or not the extractedprofile information contains the keyword information illustrated in FIG. 10.
When the keyword information is contained, the user profile information searching module 344 outputs the user ID to the user point manager 350 in association with points according to the profile point data, which is illustrated in FIG. 10.
How many points are associated with the user ID may be varied depending on what keyword information is contained, or may be constant.

Points according to the profile point data and points according to the action point data may be the same or may be different.
In the case where the two differ, points according to the profile point data may be set larger than points according to the action point data (for example, the former may be 5 points while the latter is 2 points) because, in some cases, writing in the profile information reflects the intention of a user more strongly than writing in a comment field of the community space.

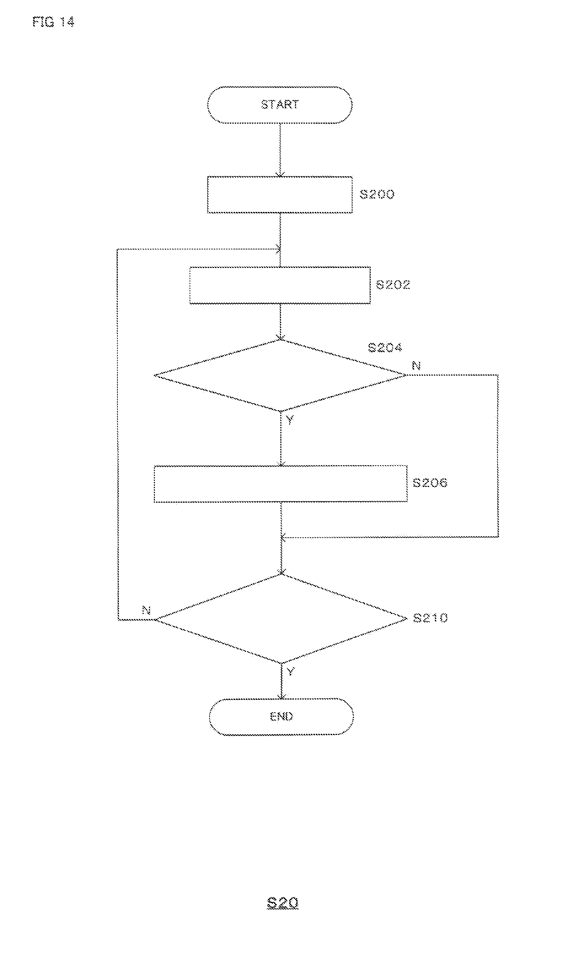

FIG. 14 is a flow chart illustrating the process (S20) of the user profile information searching module 344.
As illustrated in FIG. 14, in Step 200 (S200), the user profile information searching module 344 accepts a user ID from the user information obtaining module 342.
In Step 202 (S202), the user profile information searching module 344 extracts from the web server 24 profile information that is associated with the accepted user ID.
In Step 204 (S204), the user profile information searching module 344 determines whether or not the profile information contains keyword information, and proceeds to S206 when the keyword information is contained and otherwise proceeds to S210.

In Step 206 (S206), the user profile information searching module 344 outputs points and the user ID to the user point manager 350.
In Step 210 (S210), the user profile information searching module 344 determines whether or not the process has been executed for every observation target web server 24, and exits the process when the process has been executed and otherwise returns to S202.

The user point manager 350 (FIG. 13) accepts a user ID and points associated with this user ID from the user information obtaining module 342 and the user profile information searching module 344, and stores the user ID and the points in the user point storing module 352.
The user point storing module 352 accepts the user ID and the points from the user point manager 350, and stores the user ID and the points as a user point table illustrated in FIG. 15.

FIG. 15 is a diagram exemplifying the user point table which is stored in the user point storing module 352.
As illustrated in FIG. 15, obtained points are stored for each of a user denoted by a user ID #1 (user #1) to a user denoted by a user ID #n (n is an integer equal to or larger than 2) (user #n).
Also stored are points for profile and points of each day that falls on or between today and a date that is earlier by a predetermined number of days (30 days in FIG. 15) set in the actionperiod information, which is illustrated in FIG. 10.
For example, the user #1 obtains 5 points as the points for profile, and obtains 2 points 30 days ago, 2 points 2 days ago, and 2 points today. Total points combining the points for profile and the points of the past 30 days are stored for each user.
For example, the total points obtained by the user #1 are 11 points and the total points obtained by the user #2 are 2 points.

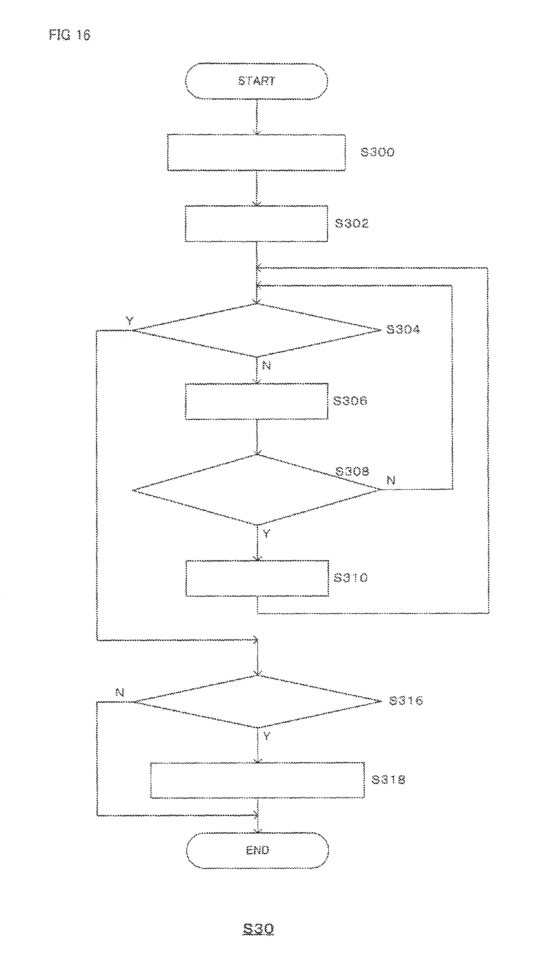

The user point manager 350 (FIG. 13) uses the user point table to perform a process to be described later with reference to FIG. 16, and creates a list of users who may be latent community members (latent community member list).
The user point manager 350 outputs the created latent community member list to the latent community member list notifying module 354.
The latent community member list notifying module 354 outputs the accepted latent communitymember list to the community generation supporting container.

FIG. 16 is a flow chart illustrating the process (S30) of the user point manager 350.
As illustrated in FIG. 16, in Step 300 (S300), the user point manager 350 obtains a user ID and points from the user information obtaining module 342 or the user profile information searching module 344.
In Step 302 (S302), the user point manager 350 stores the user ID and the points in the user point storing module 352 and creates the user point table.

In Step 304 (S304), the user point manger 350 determines whether or not the following process has been executed for every user, and proceeds to S316 when the process has been executed and otherwise proceeds to S306.
In Step 306 (S306), the user point manager 350 extracts from the user point storing module 352 total points obtained by a user #i (i is an integer equal to or larger than 1 and equal to or smaller than n).
In Step 308 (S308), the user point manager 350 determines whether or not the total points of the user #i are equal to or larger than points (X in FIG. 16) according to the member condition total point illustrated in FIG. 10.
The user point manager 350 proceeds to S310 when the total points of the user #i are X points or larger, and otherwise proceeds to S304.

In Step 310 (S310), the user point manager 350 creates a list of users who have obtained X points or more, and adds the user #i thereto.
In Step 316 (S316), the user point manager 350 determines whether or not the number of the users who have obtained X points or more is k (k is an integer equal to or larger than 2 and equal to or smaller than n: for example, 3) or larger, and proceeds to S318 when the number is k or larger and otherwise exits the process.
In Step 318 (S318), the user point manager 350 creates a latent community member list containing the identifiers of the users who have obtained X points or more.

The community detecting agent 360 (FIG. 13) includes a member registration obtaining module 362, a registered member manager 364, and a community member list notifying module 368.
With these components, the community detecting agent 360 detects the formation of a community constituted of members who wish to join the community.
The member registration obtaining module 362 receives member registration information that indicates the intent to be "registered" and a user ID from the information observing container, and outputs the member registration information and the user ID to the registered member manager 364.

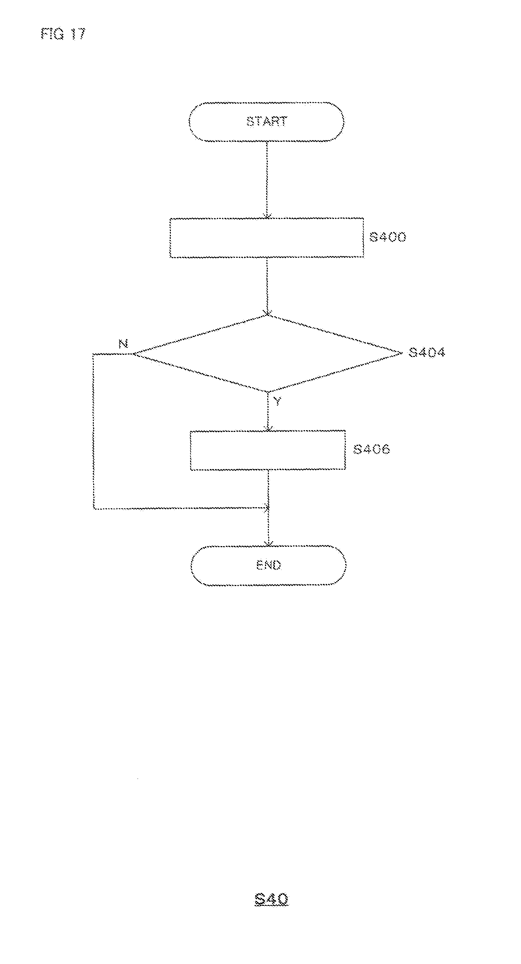

The registered member manager 364 performs a process to be described later with reference to FIG. 17, and creates a list of users who become community members (community member list).
The registeredmembermanager 364 outputs the created community member list to the community member list notifying module 368.
The community member list notifying module 368 outputs the accepted community member list to the community generation supporting container 38.

FIG. 17 is a flow chart illustrating the process (S40) of the registered member manager 364.
As illustrated in FIG. 17, in Step 400 (S400), the registered member manager 364 obtains member registration information from the community member registration observing agent 330.
In Step 404 (S404), the registered member manager 364 determines whether or not the number of "registered" members is h (h is an integer equal to or larger than 2 and equal to or smaller than k) or larger, and proceeds to S406 when the number is h or larger and otherwise ends the process.
In Step 406 (S406), the registered member manager 364 creates a community member list.

FIG. 18 is a diagram illustrating a configuration of the agent within the community generation supporting container 38 illustrated in FIG. 9.
As illustrated in FIG. 18, the agent within the community generation supporting container 38 is constituted of a community generation supporting agent 380.

The community generation supporting agent 380 includes a latent community member list obtaining module 382, a community invitation message creating module 384, a community invitation message sending module 386, a community generation requesting module 388, and a community member list accepting module 390.
The latent community member list obtaining module 382 receives a latent community member list from the community detecting container 34, and outputs the latent community member list to the community generation requesting module 388 and the community invitation message creating module 384.

Receiving the latent community member list from the latent community member list obtaining module 382, the community generation requesting module 388 specifies an arbitrary web server 24-x (x is an integer equal to or larger than 1 and equal to or smaller than M), and sends a request signal for generating a community space to the web server 24-x.
The community generation requesting module 388 may specify as the web server 24-x, for example, the web server 24 that is running the same type of community space as the community space to be generated.
Specifically, when the community space to be generated by the community generation supporting system 1 is a BBS, the community generation requesting module 388 may specify an arbitrary web server 24 that is running a BBS as the web server 24-x.

The community invitation message creating module 384 creates a community invitation message based on the community invitation message information, which is illustrated in FIG. 10.
The community invitation message is addressed to an address that is associated with a user ID on the latent community member list.
Further, the community invitation message creating module 384 outputs the community invitation message to the community invitation message sending module 386.
The community invitation message sending module 386 sends the community invitation message via the web server 24-x to the user terminal 20 that is associated with that address.
The community member list accepting module 390 accepts a community member list from the community detecting container 34, and outputs the community member list to the community information manager 306 and the web server 24-x.
The web server 24-x accepts the community member list, thereby recognizing information of members who join the generated community space.

### [Overall Operation of the Community Generation Supporting System 1]

The overall operation of the community generation supporting system 1 is described below.

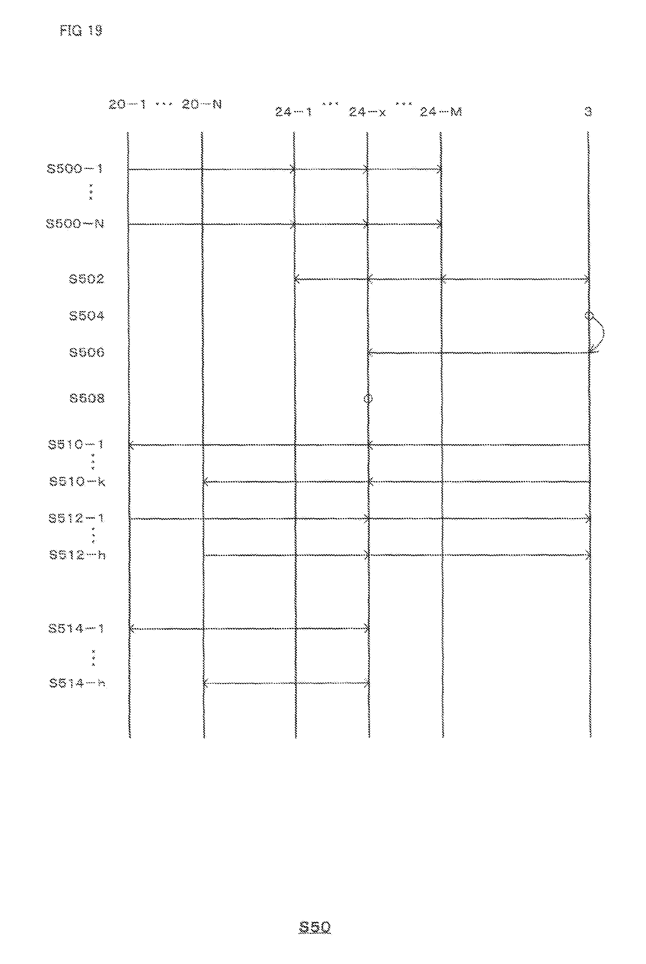

FIG. 19 is a communication sequence diagram illustrating the overall operation (S50) of the community generation supporting system 1 illustrated in FIG. 1.
As illustrated in FIG. 19, in Steps 500-1 to 500-N (S500-1 to S500-N), the user terminals 20-1 to 20-N send user IDs and publicly open information to one or more of the web servers 24-1 to 24-M.

In Step 502 (S502), the community generation supporting device 3 observes information (web data or the like) provided by the web servers 24-1 to 24-M.
In Step 504 (S504), the community generation supporting device 3 detects a latent community based on the information observation.
In Step 506 (S506), the community generation supporting device 3 specifies an arbitrary web server 24-x, and requests the web server 24-x to generate a community space.
In Step 508 (S508), the web server 24-x generates the community space.

In Steps 510-1 to 510-k (S510-1 to S510-k), the community generation supporting device 3 sends a community invitation notification via the web server 24-x to the user terminals 20-1 to 20-k of latent community members.
In Steps 512-1 to 512-h (S512-1 to S512-h), the user terminals 20-1 to 20-h of members who wish to join the community output information that indicates community member registration via the web server 24-x to the community generation supporting device 3.
In Steps 514-1 to 514-h (S514-1 to S514-h), the user terminals 20-1 to 20-h join the community utilizing the community space that is provided by the web server 24-x.

In the embodiment described above, the web server 24-x specified by the community generation supporting device 3 generates a community space related to a detected community. However, the new community space may be generated by the community generation supporting device 3 instead.
To give a specific example, the community generation supporting device 3 may additionally have the functions of the community space manager 260 to generate the new community space, and run the community such that management is executed to enable the users of the user terminals 20 that have sent the member registration information to join the community.
In the embodiment described above, the community generation supporting device 3 observes information provided by the web server 24, but the web server 24 may be omitted.
Specifically, the community generation supporting device 3 may have the functions of the web server 24 to run one or more existing community spaces with those functions, while observing a community space that is run by the community generation supporting device 3 itself to detect a latent community among members of this community space.

Thus, the community generation supporting system 1 in this embodiment does not require a person to analyze what type of community a found community is. Instead, the community generation supporting system 1 in this embodiment describes characteristics of a community in advance and may find a community that fits the description.
The community generation supporting system 1 in this embodiment may also flexibly change what community is to be found by changing specifics of the community characteristics described in advance.
Further, the community generation supporting system 1 in this embodiment is capable of finding not only existing communities but also a latent community, which is constituted of people who have a possibility of forming a community.

### Industrial Applicability

The present invention is applicable to, among others, a community generation supporting system which supports the generation of a community.

### Description of Symbols

1 community generation supporting system,
100 network,
20 user terminal,
120 main body,
122 CPU,
124 memory,
126 IO device,
128 communication device,
130 storage device,
132 storage medium,
200 user terminal program,
202 communication processing module,
204 UI,
210 mail client module,
216 web browser module,
24 web server,
240 web server program,
242 communication processing module,
244 user ID receiving module,
246 member profile information receiving module,
248 member's publicly open information receiving module,
250 mail receiving module,
252 mail sending module,
254 HTTP request receiving module,
256 web data sending module,
260 community space manager,
270 member profile DB,
272 community space DB,
3 community generation supporting device,
30 community generation supporting program,
302 communication processing module,
304 administrator IF,
306community information manager,
308 community DB,
310 community generation condition information accepting module,
312 community generation information translating module,
32 information observing container,
320 community space observation agent,
322 web server information change searching module,
324 community space web data storing module,
326 information change judging module,
328 user information notifying module,
330 community member registration observing agent,
332 member registration receiving module,
334 member registration notifying module,
34 community detecting container,
340 latent community detecting agent,
342 user information obtaining module,
344 user profile information searching module,
350 user point manager,
352 user point storing module,
354 latent community member list notifying module,
360 community detecting agent,
362 member registration obtaining module,
364 registered member manager,
368 community member list notifying module,
38 community generation supporting container,
380 community detecting agent,
382 latent community member list obtaining module,
384 community invitation message creating module,
386 community invitation message sending module,
388 community generation requesting module,
390 community member list accepting module,

FIG. 1
   - 1: COMMUNITY GENERATION SUPPORTING SYSTEM
   - 3: COMMUNITY GENERATION SUPPORTING DEVICE
   - 20: USER TERMINAL
   - 24: WEB SERVER
   - 100: NETWORK
FIG. 2A
   - (1): USER
   - (2): "MOTORCYCLE"
   - (3): BLOG/DIARY
   - (4): LATENT COMMUNITY
FIG. 2B
   - (1): USER
   - (2): COMMUNITY SPACE FOR "MOTORCYCLE"
   - (3): COMMUNITY
FIG. 3
   - 3: COMMUNITY GENERATION SUPPORTING DEVICE
   - 20: USER TERMINAL
   - 24: WEB SERVER
   - 100: NETWORK
   - (1): SEND PUBLICLY OPEN INFORMATION
   - (2): OBSERVE
   - (3): DETECT LATENT COMMUNITY
   - (4): REQUEST GENERATION OF COMMUNITY SPACE
   - (5): GENERATE COMMUNITY SPACE
   - (6): NOTIFY INVITATION
   - (7): SEND REGISTRATION REQUEST
   - (8): JOIN COMMUNITY
FIG. 4
   - 124: MEMORY
   - 126: IO DEVICE
   - 128: COMMUNICATION DEVICE
   - 130: STORAGE DEVICE
   - 132: STORAGE MEDIUM
FIG. 5
   - 200: USER TERMINAL PROGRAM
   - 202: COMMUNICATION PROCESSING
   - 210: MAIL CLIENT
   - 216: WEB BROWSER
   - (1): TO IO DEVICE
   - (2): TO NETWORK
FIG. 6
   - 240: WEB SERVER PROGRAM
   - 242: COMMUNICATION PROCESSING
   - 244: USER ID RECEIVING
   - 246: MEMBER PROFILE INFORMATION RECEIVING
   - 248: MEMBER'S PUBLICLY OPEN INFORMATION RECEIVING
   - 250: MAIL RECEIVING
   - 252: MAIL SENDING
   - 254: HTTP REQUEST RECEIVING
   - 256: WEB DATA SENDING
   - 260: COMMUNITY SPACE MANAGER
   - 270: MEMBER PROFILE DB
   - 272: COMMUNITY SPACE DB
   - (1): TO NETWORK
FIG. 7
   - (1): USER ID
   - (2): PROFILE INFORMATION
   - (3): MEMBER PROFILE INFORMATION
FIG. 8
   - (1): COMMUNITY ID
   - (2): TIME INFORMATION
   - (3): USER ID
   - (4): PUBLICLY OPEN INFORMATION
   - (5): MEMBER'S PUBLICLY OPEN INFORMATION
FIG. 9
   - 30: COMMUNITY GENERATION SUPPORTING PROGRAM
   - 32: INFORMATION OBSERVING CONTAINER
   - 34: COMMUNITY DETECTING CONTAINER
   - 38: COMMUNITY GENERATION SUPPORTING CONTAINER
   - 302: COMMUNICATION PROCESSING
   - 306: COMMUNITY INFORMATION MANAGER
   - 308: COMMUNITY DB
   - 304: ADMINISTRATOR IF
   - 310: COMMUNITY GENERATION CONDITION INFORMATION ACCEPTING
   - 312: COMMUNITY GENERATION CONDITION INFORMATION TRANSLATING
   - (1): TO WEB SERVER
   - (2): TO IO DEVICE
FIG. 10
   - (1): COMMUNITY ID
   - (2): LATENT COMMUNITY DEFINITION INFORMATION
   - (3): COMMUNITY DEFINITION INFORMATION
   - (4): COMMUNITY GENERATION SUPPORTING PROCESS INFORMATION
   - (5): MEMBER ACTION CONDITION INFORMATION
   - (6): COMMUNITY FORMATION CONDITION INFORMATION
   - (7): OBSERVATION TARGET SERVER ID
   - (8): COMMUNITY INVITATION MESSAGE INFORMATION
   - (9): USER PROFILE CONDITION INFORMATION
   - (10): USER ACTION CONDITION INFORMATION
   - (11): LATENT COMMUNITY MEMBER CONDITION INFORMATION
   - (12): LATENT COMMUNITY FORMATION CONDITION INFORMATION
   - (13): KEYWORD INFORMATION
   - (14): PROFILE POINT DATA
   - (15): ACTION DEFINITION INFORMATION
   - (16): ACTION POINT DATA
   - (17): ACTION PERIOD INFORMATION
   - (18): MEMBER CONDITION TOTAL POINT DATA
   - (19): COMMUNITY GENERATION CONDITION INFORMATION
FIG. 11
   - 32: INFORMATION OBSERVING CONTAINER
   - 320: OBSERVATION AGENT OF COMMUNITY SPACE #1
   - 322: WEB SERVER INFORMATION CHANGE SEARCHING
   - 324: COMMUNITY SPACE WEB DATA STORING
   - 326: INFORMATION CHANGE JUDGING
   - 328: USER INFORMATION NOTIFYING
   - 330: COMMUNITY MEMBER REGISTRATION OBSERVING AGENT
   - 332: MEMBER REGISTRATION RECEIVING
   - 334: MEMBER REGISTRATION NOTIFYING
   - (1): TO WEB SERVER
   - (2): FROM USER TERMINAL
   - (3): TO COMMUNITY DETECTING CONTAINER
FIG. 12
   - S100: EXTRACT COMMUNITY SPACE WEB DATA
   - S102: IS THERE ANY UPDATE IN WEB DATA?
   - S104: IS THERE ANY PREDETERMINED KEYWORD IN UPDATE?
   - S106: OUTPUT POINTS AND USER ID TO COMMUNITY DETECTING CONTAINER
   - S108: EXIT PROCESS?
   - (1): START
   - (2): END
FIG. 13
   - 34: COMMUNITY DETECTING CONTAINER
   - 340: LATENT COMMUNITY DETECTING AGENT
   - 342: USER INFORMATION OBTAINING
   - 344: USER PROFILE INFORMATION SEARCHING
   - 350: USER POINT MANAGER
   - 352: USER POINT STORING
   - 354: LATENT COMMUNITY MEMBER LIST NOTIFYING
   - 360: COMMUNITY DETECTING AGENT
   - 362: COMMUNITY MEMBER REGISTRATION OBTAINING
   - 364: REGISTERED MEMBER MANAGER
   - 368: COMMUNITY MEMBER LIST NOTIFYING
   - (1): FROM INFORMATION OBSERVING CONTAINER
   - (2): TO WEB SERVER
   - (3): TO COMMUNITY GENERATION SUPPORTING CONTAINER
FIG. 14
   - S200: ACCEPT USER ID
   - S202: EXTRACT PROFILE INFORMATION
   - S204: DOES PROFILE INFORMATION INCLUDE KEY WORD INFORMATION?
   - S206: OUTPUT POINTS AND USER ID TO USER POINT MANAGER
   - S210: HAS PROCESS BEEN EXECUTED FOR ALL OBSERVATION TARGET WEB SERVERS?
   - (1): START
   - (2): END
FIG. 15
   - (1): TOTAL OBTAINED POINT
   - (2): POINTS FOR PROFILE
   - (3): POINTS OBTAINED TODAY
   - (4): POINTS OBTAINED 1 DAY AGO
   - (5): POINTS OBTAINED 2 DAYS AGO
   - (6): POINTS OBTAINED 30 DAYS AGO
   - (7): USER ID
   - (8): USER POINT TABLE
FIG. 16
   - S300: OBTAIN USER ID AND POINTS
   - S302: CREATE USER POINT TABLE
   - S304: HAS PROCESS BEEN EXECUTED FOR ALL USERS?
   - S306: EXTRACT TOTAL POINT THAT USER #i OBTAINED
   - S308: IS TOTAL POINT OF USER #i EQUAL TO OR LARGER THAN X?
   - S310: CERATE LIST OF USERS WHOSE POINT IS EQUAL TO OR LARGER THAN X
   - S316: IS NUMBER OF USERS WHOSE POINT IS EQUAL TO OR LARGER THAN X EQUAL TO OR LARGER THAN k?
   - S318: CREATE LATENT COMMUNITY MEMBER LIST
   - (1): START
   - (2): END
FIG. 17
   - S400: OBTAIN MEMBER REGISTRATION
   - S404: IS NUMBER OF "REGISTERED" MEMBERS EQUAL TO OR LARGER THAN h?
   - S406: CREATE COMMUNITY MEMBER LIST
   - (1): START
   - (2): END
FIG. 18
   - 38: COMMUNITY GENERATION SUPPORTING CONTAINER
   - 380: COMMUNITY GENERATION SUPPORTING AGENT
   - 382: LATENT COMMUNITY MEMBER LIST OBTAINING
   - 384: COMMUNITY INVITATION MESSAGE CREATING
   - 386: COMMUNITY INVITATION MESSAGE SENDING
   - 388: COMMUNITY GENERATION REQUESTING
   - 390: COMMUNITY MEMBER LIST ACCEPTING
   - (1): FROM COMMUNITY DETECTING CONTAINER
   - (2): TO WEB SERVER
   - (3): TO USER TERMINAL
   - (4): TO COMMUNITY INFORMATION MANAGER AND WEB SERVER
FIG. 19
   - 3: COMMUNITY GENERATION SUPPORTING DEVICE
   - 20: USER TERMINAL
   - 24: WEB SERVER
   - S500: USER ID, PUBLICLY OPEN INFORMATION
   - S502: OBSERVE INFORMATION
   - S504: DETECT LATENT COMMUNITY
   - S506: REQUEST COMMUNITY GENERATION
   - S508: GENERATE COMMUNITY SPACE
   - S510: NOTIFY INVITATION
   - S512: SEND MEMBER REGISTRATION
   - S514: JOIN COMMUNITY

## Claims

1. A community generation supporting system, comprising:
a plurality of user terminals;
an information providing device which stores and provides information; and
a community generation supporting device which supports generation of a community that users of the plurality of user terminals join,
the plurality of user terminals, the information providing device, and the community generation supporting device being connected to a network,
the plurality of user terminals sending information to the information providing device via the network,
wherein the community generation supporting device comprises:
a community generation condition information accepting means which accepts community generation condition information concerning a generation condition of the community;
an information observing means which observes the information stored in the information providing device;
a latent community detecting means which, based on the information observed by the information observing means, detects a latent community which may be constituted of users who satisfy a condition according to the community generation condition information but which the users have not joined yet;
a community generation supporting means which checks with user terminals of the users of the detected latent community about whether or not the users wish to join a community that corresponds to the latent community, thereby supporting the generation of the community; and
a community detecting means which, depending on a result of the process of the community generation supporting means, detects the community if the condition according to the community generation condition information is satisfied.

2. A community generation supporting system according to claim 1,
wherein the information observing means observes a change to the information stored in the information providing device, and
wherein, when the information observingmeans observes a change to the information, the latent community detecting means detects the latent community.

3. A community generation supporting system according to claim 1 or 2, wherein the community generation condition information contains:
latent community definition information which defines a condition for generating the latent community;
community definition information which defines a condition for generating the community corresponding to the latent community; and
community generation supporting process information which indicates process specifics for supporting the generation of the community based on the latent community.

4. A community generation supporting system according to any one of claims 1 to 3,
wherein the community generation supporting device further comprises a process entity generating means which generates a plurality of process entities for executing predetermined processes based on the community generation condition information, and
wherein the plurality of processing entities each implement one of the information observing means, the latent community detecting means, the community generation supporting means, and the community detecting means.

5. A community generation supporting system according to any one of claims 1 to 4, wherein the community generation supporting device further comprises:
a member registration information obtaining means which obtains from the user terminals member registration information that indicates intent to join the community; and
a community managing means which performs management for enabling users of the user terminals that have sent the member registration information to join the community.

6. A community generation supporting system according to any one of claims 1 to 5, wherein at least two of the plurality of user terminals, the information providing device, and the community generation supporting device physically reside in the same node.

7. A community generation supporting method performed among a plurality of user terminals, an information providing device, which stores and provides information, and a community generation supporting device, which supports generation of a community that users of the plurality of user terminals join, the plurality of user terminals, the information providing device, and the community generation supporting device being connected to a network, the plurality of user terminals sending information to the information providing device via the network,
the community generation supporting method comprising performing by the community generation supporting device:
a community generation condition information accepting step of accepting community generation condition information concerning a generation condition of the community;
an information observing step of observing the information stored in the information providing device;
a latent community detecting step of detecting, based on the observed information, a latent community which may be constituted of users who satisfy a condition according to the community generation condition information but which the users have not joined yet;
a community generation supporting step of checking with user terminals of the users of the detected latent community about whether or not the users wish to join a community that corresponds to the latent community, thereby supporting the generation of the community; and
a community detecting step of detecting, depending on a result of the process of the community generation supporting step, the community if the condition according to the community generation condition information is satisfied.

8. A community generation supporting method according to claim 7,
wherein the information observing step comprises observing a change to the information stored in the information providing device, and
wherein the latent community detecting step comprises detecting the latent community when a change to the information is observed in the information observing step.

9. A community generation supporting method according to claim 7 or 8, wherein at least two of the plurality of user terminals, the information providing device, and the community generation supporting device physically reside in the same node.

10. A community generation supporting program executed among a plurality of user terminals, an information providing device, which stores and provides information, and a community generation supporting device, which supports generation of a community that users of the plurality of user terminals join, the plurality of user terminals, the information providing device, and the community generation supporting device being connected to a network, the plurality of user terminals sending information to the information providing device via the network,
the community generation supporting program causing the community generation supporting device to execute:
a community generation condition information accepting step of accepting community generation condition information concerning a generation condition of the community;
an information observing step of observing the information stored in the information providing device;
a latent community detecting step of detecting, based on the observed information, a latent community which may be constituted of users who satisfy a condition according to the community generation condition information but which the users have not joined yet;
a community generation supporting step of checking with user terminals of the users of the detected latent community about whether or not the users wish to join a community that corresponds to the latent community, thereby supporting the generation of the community; and
a community detecting step of detecting, depending on a result of the process of the community generation supporting step, the community if the condition according to the community generation condition information is satisfied.

11. A community generation supporting program according to claim 10, wherein at least two of the plurality of user terminals, the information providing device, and the community generation supporting device physically reside in the same node.
